# EUROPEAN PATENT APPLICATION

(11) **EP 4 451 291 A1**
(43) Date of publication of application: **23.10.2024**
(21) Application number: 22918269.6
(22) Date of filing: 31.10.2022
(51) Int. Cl.: G21F 5/08, G21F 5/06

(54) **NUCLEAR FUEL TRANSPORTATION CONTAINER AND NUCLEAR FUEL TRANSPORTATION DEVICE HAVING SAME**

(30) Priority: 05.01.2022 CN 202210009866
(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: LIANG, Huo, Shenzhen, Guangdong 518031 (CN); JI, Wenying, Shenzhen, Guangdong 518031 (CN); SHEN, Yonggang, Shenzhen, Guangdong 518031 (CN); CUI, Xuyang, Shenzhen, Guangdong 518031 (CN); OUYANG, Tailong, Shenzhen, Guangdong 518031 (CN); OUYANG, Yong, Shenzhen, Guangdong 518031 (CN); WANG, Xiong, Shenzhen, Guangdong 518031 (CN); LU, Changdong, Shenzhen, Guangdong 518031 (CN); CHEN, Yunyin, Shenzhen, Guangdong 518031 (CN); LIU, Jianchang, Shenzhen, Guangdong 518031 (CN); WANG, Xianmao, Shenzhen, Guangdong 518031 (CN); LIU, Zhonghao, Shenzhen, Guangdong 518031 (CN); CHEN, Yichen, Shenzhen, Guangdong 518031 (CN); BAO, Xiaoli, Shenzhen, Guangdong 518031 (CN)
(74) Representative: Westphal, Mussgnug & Partner, Patentanwälte mbB
(86) International application number: PCT/CN2022/128543
(87) International publication number: WO 2023/130817

(57) **Abstract**

According to the nuclear fuel transportation container provided by the present invention, a tank body for accommodating nuclear fuel assemblies is wrapped in a plastically deformable impact-resistant protective layer, and several recesses for accommodating supporting columns are formed in the protective layer, so that the supporting columns can abut against the tank body and bear the weight of the container, the protective layer does not bear weight, and an energy absorption structure is used to plastically deform and resist impact,so that the impact resistance is improved.

## Description

### FIELD

The present invention belongs to the field of nuclear material loading equipment, and particularly relates to a nuclear fuel transportation container.

### BACKGROUND

Special containers are used for transporting new fuel assemblies from the manufacturing plant to the nuclear power plant and spent fuel assemblies from the nuclear power plant to processing plant or storage place. These containers are radiation-proof, neutron-transmission-proof, impact-resistant and capable of heat dissipation/heat insulation tanks which can withstand transportation by trains, ships, and automobiles, as well as several lifts. The cladding of spent fuel assemblies has become brittle and contains radioactive gas inside, thereby requiring the transportation container to have excellent impact resistance.

The cushioning structure of existing nuclear fuel transportation containers, due to the need to carry the weight of the contents as well as the entire container, have to possess a certain degree of mechanical strength and cannot cope well with accidental tilting or dropping during lifting.

### SUMMARY

The technical problem to be solved by the present invention is how to improve the impact resistance of the nuclear fuel transportation container.

The present invention provides a nuclear fuel transportation container including a tank accommodating nuclear fuel assemblies and a protective layer wrapping around the tank, the protective layer is plastically deformable and impact-resistant, the protective layer has several recesses, the recesses are located on the bottom or side of the tank, the recesses are used to accommodate supporting columns, the supporting columns abut against the tank, and the supporting columns carry the weight of the nuclear fuel transportation container.

Optionally, the recesses are divided into two groups, one group is located on the bottom of the tank, and the other group is located on the side of the tank.

With the above structure, the posture of the container can be either upright or horizontal, facilitating transportation and loading and unloading operations.

Optionally, the protective layer includes an outer shell and several cushioning energy-absorbing plates which are fixedly installed between the outer shell and the tank, the recesses are formed by the outer shell locally inwardly concaving and abutting against the surface of the tank, the supporting columns abut against the tank through the outer shell, and an up-and-down through ventilation path is provided in the sandwiched space between the outer shell and the tank, the ventilation path bypasses or penetrates the cushioning energy-absorbing plates.

With the above structure, the container can mitigate smaller impacts of general vibrations and vehicle acceleration through the elastic deformation of the cushioning energy-absorbing plates and absorb severe impacts from accidental collision or dropping through plastic deformation.

Optionally, the outer shell has two sets of ventilation holes, one set is located near the upper edge of the side of the tank, and the other set is located near the lower edge of the side of the tank.

With the above structure, a ventilation path is provided in the sandwiched space between the outer shell and the tank to facilitate air flow, allowing gas in the sandwiched space to exchange externally through the two sets of ventilation holes, so that the protective layer doubles as a radiator and promoting heat dissipation of the tank, which is particularly important for spent fuel assemblies.

Optionally, an elastic material layer is provided between a portion of the outer shell corresponding to the bottom surface of the recesses and the tank, and the supporting columns abut against the tank through the outer shell and the elastic material layer sequentially.

Optionally, the elastic material layer is adhesive-fixed wood, rubber, or rigid polyurethane foam.

Optionally, the cushioning energy-absorbing plates are wavy or zigzag-shaped bent plates, and the stretching direction of the bent shape of the bent plate is perpendicular to the outer shell, and the adjacent cushioning energy-absorbing plates are spaced apart from each other and staggered with each other.

Optionally, the outer shell has several slits, the cushioning energy-absorbing plate is an alloy plate that plastically deforms at room temperature, and one end of the cushioning energy-absorbing plates is welded to the surface of the tank and the other end is one-to-one correspondingly welded in the slits.

The present invention further provides a nuclear fuel transportation device, including the nuclear fuel transportation container as described in any one of the foregoing and a supporting base, the supporting base includes several supporting columns, the supporting columns are one-to-one correspondingly inserted into the recesses, and the supporting columns abut against the tank.

Optionally, the supporting base is a frame structure, and the supporting columns are fixedly connected by several connecting rods.

By wrapping the tank accommodating nuclear fuel assemblies with a protective layer which is plastically deformable and impact-resistant, and providing several recesses accommodating supporting columns on the protective layer, so that the supporting columns abut against the tank and carry the weight of the container, while the protective layer is not load-carrying and is provided with an energy-absorbing structure to resist impacts through plastic deformation, thereby improving the impact resistance of the container.

### BRIEF DESCRIPTION OF THE DRAWINGS

The accompanying drawings should be used in conjunction with the detailed embodiments section. In the drawings:
FIG. 1 is a sectional schematic view of Embodiment 1;
FIG. 2 is a cross-sectional schematic view of a position AA of FIG. 1;
FIG. 3 is a sectional schematic view of Embodiment 2 in an upright position;
FIG. 4 is a bottom schematic view of Embodiment 2 in a horizontal position;
FIG. 5a is a front view of the support of Embodiment 2;
FIG. 5b is a top view of the support of Embodiment 2;
FIG. 6 is a cross-sectional schematic view of Embodiment 3;
FIG. 7 is a three-dimensional schematic view of the cushioning energy-absorbing plate of Embodiment 3.

### Reference signs:

1, tank; 11, tank shell; 12, lead plate; 13, boron-rich stainless steel plate; 14, flange; 15, lifting lug; 16, bolt pair;
2, protective layer; 201, recess; 202, ventilation hole; 21, outer shell; 22, cushioning energy-absorbing plate; 221, panel; 222, connecting plate; 23, elastic material layer;
3, support; 31, supporting column; 32, connecting rod.

### DETAILED DESCRIPTION

For a better understanding of the contents of the present invention, the embodiments are described in detail in conjunction with the accompanying drawings.

In this description, the directional terms such as "center", "up", "down", "front", "back", "left", "right", "vertical", "horizontal", "top", "bottom", "inside" and "outside" are based on the observation angle shown in the drawings; "circumferential" refers to a circumference along the center of a cross-section; "profile" refers to a visible surface in the perspective direction with the maximum projected area.

### Embodiment 1

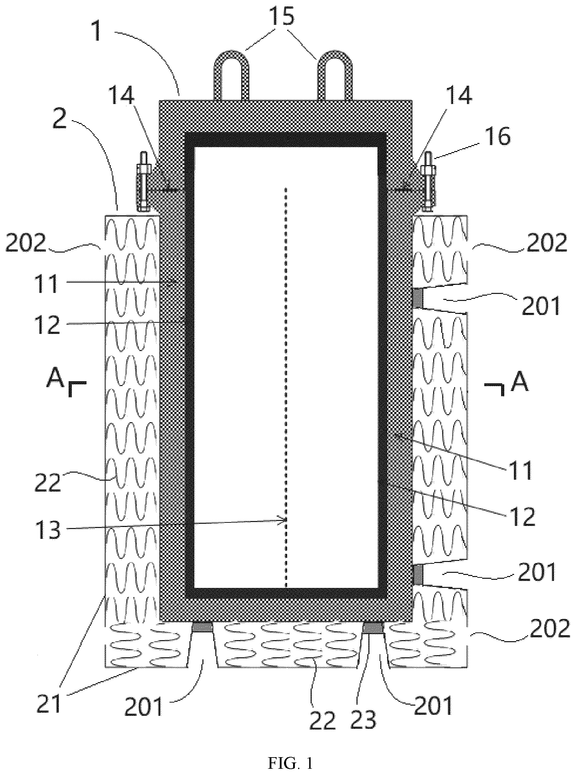

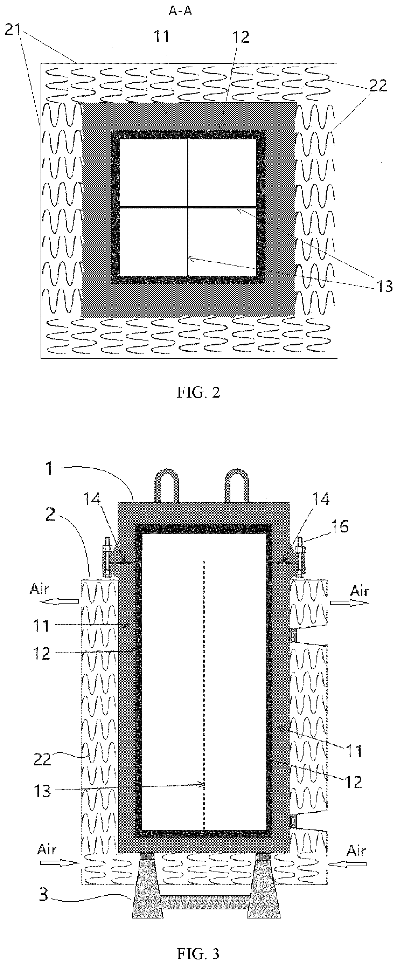

A nuclear fuel transportation container. Referring to FIG. 1 and FIG. 2, the nuclear fuel transportation container includes a tank 1 accommodating nuclear fuel assemblies and a protective layer 2 wrapping around the tank. The tank 1 is a square prism divided into a main body and a top cover. The junction between the main body and the top cover of the tank 1 is set as a pair of flanges 14 which are fixed to each other by bolt pairs 16. During installation, the upper surface of the main body and the lower surface of the top cover are mutually fitted, and the screw through-holes of the pair of flanges 14 correspond to each other, allowing the bolt pairs 16 to pass through and then be tightened by screw nuts to fix and seal the main body and the top cover to each other.

A sealing ring can also be arranged between the main body and the top cover in an encircling arrangement, and the setting of the sealing ring has a sealing effect on the abutment between the main body and the top cover, thereby improving the sealing of the junction between the main body and the top cover to prevent the communication between the nuclear fuel assemblies in the tank 1 and external environment. The number of the sealing ring can be one. However, to further improve the sealing between the main body and the top cover, the number of the sealing rings can also be at least two, and at least two sealing rings can be radially spaced apart at the junction between the main body and the top cover.

Two lifting lugs 15 are provided on the top surface of the top cover of the tank 1.

The protective layer 2 wraps around the main body of the tank 1, leaving the top cover oft the tank 1 and flanges 14 exposed. Since the container is used in conjunction with the supporting base 3 described below, and the top cover is shorter in length and weighs much less than the container body, it is possible to leave the top cover of the tank 1 exposed.

The protective layer 2 includes an outer shell 21 and several cushioning energy-absorbing plates 22 which are fixedly installed between the outer shell 21 and the tank 1. The protective layer 2 can resist impact through plastic deformation. Specifically, the outer shell 21 is made of stainless steel sheet. The cushioning energy-absorbing plate 22 is made of an iron alloy plate that can plastically deform at room temperature. The cushioning energy-absorbing plates 22 are wavy bent plates, and the stretching direction of the bent shape is perpendicular to the outer shell 21. After being subjected to a significant compressive force, the ends of the cushioning energy-absorbing plate 22 undergo irreversible compressive deformation, folding into an "S" shape and absorbing a large amount of energy, thereby achieving the effect of mitigating impact. The number of cushioning energy-absorbing plates 22 installed in the protective layer 2 can be determined according to parameters such as the full loaded weight and the maximum dropping height of the nuclear fuel transportation container, thus adapting to different operating environments.

The protective layer is provided with eight recesses 201, four of which are located on the bottom surface of the tank 1 and the other four are located on the side of the tank 1. The recesses 201 are formed by the outer shell 21 locally inwardly concaving. An elastic material layer 23 is provided between a portion of the outer shell 21 corresponding to the bottom surface of the recesses 201 and the tank 1. Specifically, the elastic material layer is adhesive-fixed wood, rubber, or rigid polyurethane foam.

The protective layer 2 is cushioned by elastic deformation under smaller impacts of loading, unloading, acceleration and deceleration, while it can undergo energy absorption by plastic deformation under unexpected severe impacts, capable of coping with traffic accidents or accidental tilting and falling during lifting.

Referring to FIG. 3, the nuclear fuel transportation container can be supported by a support 3, which is an independent frame. The support can also be a part of the load-carrying structure of trains, ships, or automobiles.

The recesses 201 are used to accommodate supporting columns 31. The supporting columns 31 abut against the tank 1 through the outer shell 21 and the elastic material layer 23 sequentially. The supporting columns 31 carry the weight of the nuclear fuel transportation container, while the protective layer 2 does not carry weight. Preferably, the supporting columns 31 are frustum of a cone or a pyramid and serve to support the nuclear fuel transportation container. The supporting columns 31 is of the same shape as the recesses 201 located on the bottom or side of the tank 1, so that the supporting columns 31 and the recesses 201 can be cooperatively connected. The height of the supporting columns 31 is greater than the height of the supporting recesses, thereby preventing the protective layer 2 from contacting the ground, and avoiding the gravity of the nuclear fuel transportation container from compressing the the cushioning energy-absorbing plates 22 in the protective layer 2 during lifting of the nuclear fuel assemblies and transportation, which causes the cushioning energy-absorbing plates 22 to absorb energy and deform prematurely and to render them ineffective for protection.

Specifically, when the nuclear fuel transportation container is used for transportation, it is placed upright, and the supporting columns 31 abut against the four recesses 201 located at the bottom of the tank 1 through the outer shell 21 and the elastic material layer 23 sequentially. When the nuclear fuel transportation container is used for loading and unloading, it is placed horizontally, and the supporting columns 31 abut against the four recesses 201 located at the side of the tank 1 through the outer shell 21 and the elastic material layer 23 sequentially.

The outer shell 21 has several slits. One end of the cushioning energy-absorbing plates 22 is welded to the surface of the tank 1, and the other end of the cushioning energy-absorbing plates 22 is one-to-one correspondingly welded in the slits. The adjacent cushioning energy-absorbing plates 22 are spaced apart from each other and staggered with each other so as to form an up-and-down through ventilation path bypassing the cushioning energy-absorbing plates 22 in the sandwiched space between the outer shell 21 and the tank 1.

The outer shell 21 has two sets of ventilation holes 202. One set of ventilation holes 202 is located near the upper edge of the side of the tank 1, and the other set of ventilation holes 202 is located near the lower edge of the side of the tank 1.

External air can enter the sandwiched space between the outer shell 21 and the tank 1 from the ventilation holes 202 on the lower edge of the side of the tank 1, and exit from the ventilation holes 202 on the upper edge of the side of the tank 1 through the ventilation path between the cushioning energy-absorbing plates 22. The cushioning energy-absorbing plates 22 also passively dissipate heat. Since spent fuel continues to dissipate heat, the transportation container have to have a certain heat dissipation capacity.

The tank shell 11 of the tank 1 is a stainless steel component designed to ensure the stiffness of the tank 1, capable of carrying the weight of the internal nuclear fuel assemblies and the entire nuclear fuel transportation container without deformation. The tank shell 11 is lined with lead plates 12 inside to shield the high-energy rays emitted by the internal nuclear fuel assemblies of the tank 1. The internal space of the tank 1 is divided into four square cylindrical compartments by boron-rich stainless steel plates 13 and others. Each compartment is used to accommodate a nuclear fuel assembly. The boron-rich stainless steel plates 13 can absorb neutrons to prevent the spent nuclear fuel assemblies from reaching criticality. Understandably, the number of the compartments can be determined based on the size, structure and weight of specific fuel assemblies, while considering both transportation efficiency and safety performance.

In other embodiments, the tank 1 can be cylindrical or other polygonal prismatic, set in a side-hinged opening and closing, snap fastening method. However, the contact surface between the tank 1 and the supporting columns should be horizontal.

In other embodiments, the lifting lugs can be three or four, or more and divided into two, three or four groups, for lifting the transportation container. The configuration of several lifting lugs can reduce the risk of containers dropping due to fatigue fracture of lifting lugs, thus preventing accidents caused by damage to lifting structures.

In other embodiments, the top cover of the tank 1 can be wrapped with the protective layer 2 or other cushioning layers.

In other embodiments, the recesses 201 can be provided in only one group and are located on the side or bottom of the tank 1, and the number of recesses 201 can be three, five, six or eight.

In other embodiments, the portion of the outer shell 21 corresponding to the bottom surface of the recesses 201 can directly abut against the tank 1, or the recess 201 can be a through hole. However, an elastic material layer 23 should be provided on the top surface of the supporting columns 31.

In other embodiments, the two ends of the cushioning energy-absorbing plates 22 are fixedly installed in the sandwiched space between the outer shell 21 and the tank 1 by bolts.

In other embodiments, the internal space of the tank 1 can be divided into two or three compartments, or remain undivided, which is determined based on the size, structure and weight of specific nuclear fuel assemblies. Generally, the overall weight of the container should be controlled, taking into account the efficiency and safety of transportation.

### Embodiment 2

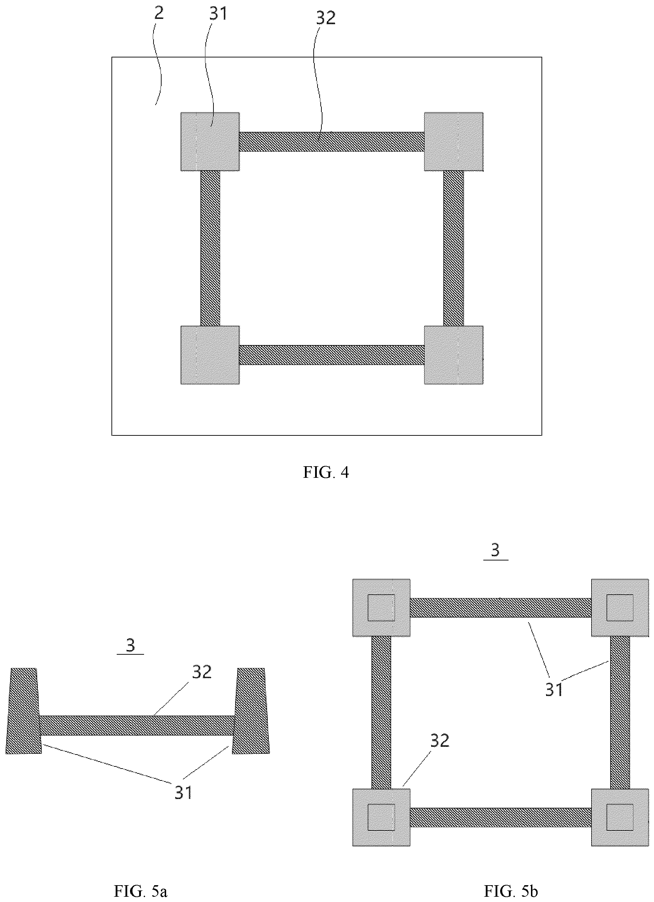

A nuclear fuel transportation device, referring to FIG. 3 through FIG. 5b, includes the nuclear fuel transportation container of Embodiment 1 and a supporting base 3 of a frame-type structure. The supporting base 3 includes four supporting columns 31 which are one-to-one correspondingly inserted into the four recesses 201 located at the bottom of the tank 1. The supporting columns 31 abut against the four recesses 201 located at the bottom of the tank 1 through the outer shell 21 and the elastic material layer 23 sequentially, so as to place the nuclear fuel transportation container in an upright position, which can be used for transportation of the nuclear fuel transportation container. The supporting columns 31 are fixedly connected by several connecting rods 32.

In other embodiments, the supporting columns 31 abut against the four recesses 201 located at the side of the tank 1 through the outer shell 21 and the elastic material layer 23 sequentially, so as to place the nuclear fuel transportation container in a horizontal position, which can be used for loading and unloading of the nuclear fuel transportation container. The supporting columns 31 are fixedly connected by several connecting rods 32. Since the nuclear fuel assemblies are long strips and the height of the nuclear fuel transportation device is greater than its width, the length of the connecting rods 32 of the supporting base 3 for a horizontal placement needs to be greater than the length of the connecting rods 32 of the supporting base 3 for an upright placement.

In other embodiments, the number of supporting columns 31 corresponds to the number of a group of recesses 201, which can be three, five, six or eight. The top of the supporting columns 31 is provided with an elastic material layer 23.

### Embodiment 3

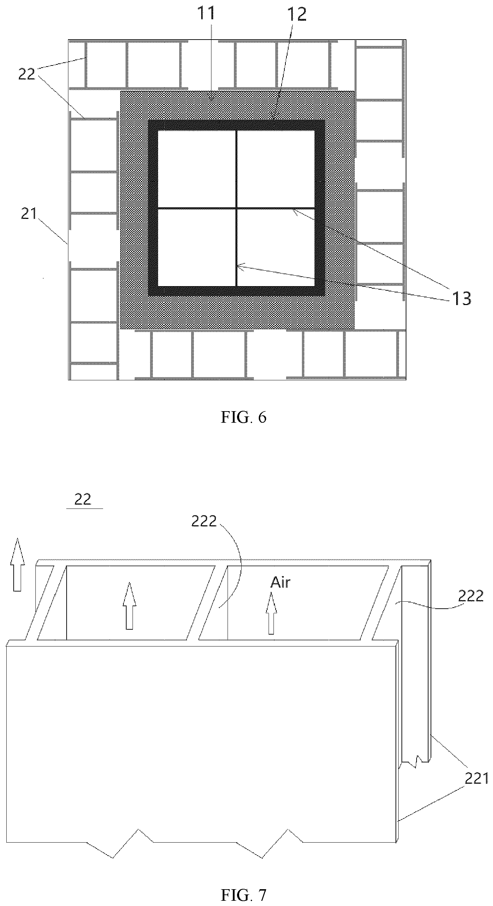

A nuclear fuel transportation container, which is an improvement to Embodiment 1. Referring to FIG. 6 and FIG. 7, the main improvements are as follows:

The cushioning energy-absorbing plates 22 are aluminum alloy plates that can deform plastically at room temperature. The cushioning energy-absorbing plates 22 are long strips and composed of two panels 221 and three connecting plates 222, with the connecting plates 222 perpendicular to and located between the two panels 221 and extending in the length direction of the cushioning energy-absorbing plates 22. The two outer surfaces of the cushioning energy-absorbing plates 22 are attached and fixed to the tank 1 and the outer shell 21 respectively with adhesive or bolts. Air circulation is allowed between the two ends of the cushioning energy-absorbing plates 22. External air can enter the sandwiched space between the outer shell 21 and the tank 1 from the ventilation holes 202 on the lower edge of the side of the tank 1, and exit from the ventilation holes 202 near the upper edge of the side of the tank 1 through the ventilation path between and within the cushioning energy-absorbing plates 22.

The nuclear fuel transport container is substantially identical in other respects to Embodiment 1.

The present invention wraps the tank accommodating nuclear fuel assemblies with a protective layer which is plastically deformable and impact-resistant, and provides several recesses accommodating supporting columns on the protective layer, so that the supporting columns abut against the tank and carry the weight of the container, while the protective layer is not load-carrying and is provided with an energy-absorbing structure to resist impacts through plastic deformation, thereby improving the impact resistance of the container.

The exemplary embodiments described above embody the technical concepts and characteristics of the present invention, enable those skilled in the art to understand the content of the invention and implement it accordingly, but do not constitute any limitation on the scope of protection of the present invention. Any simple amendments or equivalent transformations made based on the above embodiments should fall within the scope of protection of the present invention.

## Claims

1. A nuclear fuel transportation container, comprising a tank accommodating nuclear fuel assemblies and a protective layer wrapping around the tank, **characterized in that** the protective layer is plastically deformable and impact-resistant, the protective layer has several recesses, the recesses are located on the bottom or side of the tank, the recesses are used to accommodate supporting columns, the supporting columns abut against the tank, and the supporting columns carry the weight of the nuclear fuel transportation container.

2. The nuclear fuel transportation container according to claim 1, **characterized in that** the recesses are divided into two groups, one group is located on the bottom of the tank, and the other group is located on the side of the tank.

3. The nuclear fuel transportation container according to claim 1, **characterized in that** the protective layer comprises an outer shell and several cushioning energy-absorbing plates, several cushioning energy-absorbing plates are fixedly installed between the outer shell and the tank, the recesses are formed by the outer shell locally inwardly concaving and abutting against the surface of the tank, the supporting columns abut against the tank through the outer shell, and a ventilation path is provided in the sandwiched space between the outer shell and the tank, the ventilation path bypasses or penetrates the cushioning energy-absorbing plates.

4. The nuclear fuel transportation container according to claim 3, **characterized in that** the outer shell has two sets of ventilation holes, one set is located near the top of the tank, and the other set is located near the bottom of the tank.

5. The nuclear fuel transportation container according to claim 3, **characterized in that** an elastic material layer is provided between a portion of the outer shell corresponding to the bottom surface of the recesses and the tank, and the supporting columns abut against the tank through the outer shell and the elastic material layer sequentially.

6. The nuclear fuel transportation container according to claim 5, **characterized in that** the elastic material layer is adhesive-fixed wood, rubber, or rigid polyurethane foam.

7. The nuclear fuel transportation container according to claim 3, **characterized in that** the cushioning energy-absorbing plates are bent plates, the bent plates are wavy or zigzag-shaped, and the stretching direction of the bent shape of the bent plate is perpendicular to the outer shell, the adjacent cushioning energy-absorbing plates are spaced apart from each other, and the adjacent cushioning energy-absorbing plates are staggered with each other.

8. The nuclear fuel transportation container according to claim 7, **characterized in that** the outer shell has several slits, the cushioning energy-absorbing plate is an alloy plate that plastically deforms at room temperature, and one end of the cushioning energy-absorbing plates is welded to the surface of the tank and the other end is one-to-one correspondingly welded in the slits.

9. A nuclear fuel transportation device, **characterized by** comprising the nuclear fuel transportation container according to any one of claims 1-8 and a supporting base, the supporting base comprises several supporting columns, the supporting columns are one-to-one correspondingly inserted into the recesses, and the supporting columns abut against the tank.

10. The nuclear fuel transportation device according to claim 9, **characterized in that** the supporting base is a frame structure, and the supporting columns are fixedly connected by several connecting rods.
